# EUROPEAN PATENT APPLICATION

(11) **EP 4 458 883 A1**
(43) Date of publication of application: **06.11.2024**
(21) Application number: 23171896.6
(22) Date of filing: 05.05.2023
(51) Int. Cl.: C08J 3/075, A23L 33/105, A23L 33/21, C08J 9/28

(54) **POLYSACCHARIDE COMPOSITION AND GASTRIC BALLOON FORMED FROM SUCH COMPOSITION**

(71) Applicant: Somorrostro Spezzi, Pablo Hernan, C1425EKQ Buenos Aires (AR)
(72) Inventor: Somorrostro Spezzi, Pablo Hernan, C1425EKQ Buenos Aires (AR)
(74) Representative: Bardehle Pagenberg S.L.

(57) **Abstract**

The present disclosure relates to a method for producing an expandable polymer, a composition comprising the polymer, a tablet or capsule comprising the composition and a resorbable gastric balloon formed by such composition. Further, the present disclosure relates to uses of the composition as a tablet or capsule for inducing satiety in a subject.

## Description

### TECNICAL FIELD

The present disclosure relates to a method for producing an expandable polymer, a composition comprising the polymer, tablets and capsules comprising the composition and a resorbable gastric balloon formed by such composition. Further, the present disclosure relates to uses of the composition for inducing satiety in a subject.

### BACKGROUND

Obesity increases the risk for the occurrence of severe health problems such as diabetes, heart disease, stroke, and several cancer types. Effective and fast weight management methods and devices include mostly invasive methods. For instance, liposuction, gastric reduction and gastric balloons are common methods for effective weight reduction and known means for preventing or treating obesity.

Generally, a gastric balloon is a device that requires professional handling for its placement. For example, lenca et al.: The Procedureless Elipse Gastric Balloon Program: Multicenter Experience in 1770 Consecutive Patients describe a gastric balloon made of synthetic polymer. First, the balloon has to be ingested by the patient, and second, the balloon needs then to be inflated by the physician. It is required that a professional such as a physician places the balloon in the patient's stomach. This is an invasive process for the patient, as the synthetic balloon in the gastric space is inflated through the oesophagus of the patient using special equipment. The patient carries the balloon made of synthetic polymer in his stomach for about 4 months, which partially fills the stomach by occupying a volume inside the stomach. In this manner, the patient is prevented from ingesting food in big quantities.

US 8,814,898 describes methods for temporarily occupying a gastric space in a body of a patient by delivering a device assembly into the gastric space. The device induces satiety by expanding and occupying volume within the gastric space of the patient. After an effective period of time, the substance begins to breakdown such that it is released from the body. The device described in US 8,814,898 requires professional handling for being placed and inflated in the patient's stomach.

Generally, effective satiety inducing methods and techniques for helping to prevent obesity such as discussed above do require professional assistance and do not allow for convenient ways of self-application mechanism. Despite the measures described above, it has not been possible so far to overcome the drawbacks of the prior art. Specifically, effective and convenient compositions are not available to date.

### SUMMARY

Examples of the present disclosure solve the problem by the provision of a method for producing an expandable polymer, a composition comprising the polymer, a tablet or capsule comprising the composition and a resorbable gastric balloon formed by such composition. Further, the present disclosure relates to uses of the composition as a tablet or capsule for inducing satiety in a subject.

Specifically, aspects of the present disclosure relate to a method for producing an expandable polymer, comprising the following steps;
a) providing a polymer,
b) adding water to the polymer to obtain a polymer solution containing 0.5 to 3.0 wt.% of the polymer, preferably 1 to 2 wt.%, most preferably 1.25 to 1.75 wt.%;
c) mixing the polymer solution at 5 to 60 rounds per minute (rpm), preferably 10 to 50 rpm, most preferably 20 to 40 rpm for between 5 and 150 minutes, preferably between 15 and 120 minutes, most preferably between 30 and 90 minutes, thereby providing a polymer dispersion;
d) cooling the polymer dispersion at -30 to -5°C, preferably -25 to -10°C, most preferably -20 to -15°C for at least 1h, preferably at least 5h, most preferably at least 10h,
e) freezing the cooled polymer dispersion at -50 to -30°C, preferably -45 to -35°C; and
f) drying the frozen polymer dispersion at a pressure of 10 to 1,000 Pa, preferably 50 to 500 Pa, more preferably 100 to 200 Pa, below residual moisture content of 3 wt.%, preferably 1.5 wt.%, most preferably 0.75 wt.% thereby providing the expandable polymer. Surprisingly, the treated polymer according to this first aspect provides for highly increased swelling properties in aqueous solutions, like gastric medium, as compared to untreated polymers.

"Expandable" describes the physical property of the polymer capable of expanding and increasing its volume upon hydration. The expandable polymer may also disperse more effectively when hydrated, as compared to polymers not subjected to treatments of the present disclosure. The expandable polymers according to the present disclosure can be used to form a resorbable gastric balloon that is capable to largely maintain its physical shape and stiffness over at least 30 - 45 minutes in intestinal or gastric medium.

In some aspects, the polymer may be a polysaccharide. Further, the polysaccharide may comprise β-1→4-linked D-glucose and D-mannose. In a preferred embodiment, the polysaccharide is glucomannan. Glucomannan is a plant derived polysaccharide belonging to the mannan family with β-1→4-linked D-glucose and D-mannose. Konjac glucomannan is extracted from *Amorphophallus konjac,* known as konjac plant (Xiao et al. (2000) "Blend films from chitosan and konjac glucomannan solutions", Journal of applied polymer science, 76(4): 509 - 515). Although different ratios of mannose/glucose can be found according to the source, Konjac glucomannan has a mannose/glucose molar ratio around 1.6:1 and may vary in the acetylation degree, with typically 5 to 10 % acetylation.

Surprisingly, the inventors found that the claimed treatment of polymers like glucomannan exhibit much improved swelling properties as compared to known respectively untreated polymers. Specifically, the claimed treatment of the polymer results in a more efficient and faster dispersion of the polymer in water, as a faster increase in viscosity of the polymer solution demonstrates. Second, the polymer treated according to the present disclosure increases its volume via expansion upon hydration, for example in the stomach of a subject, and forms a resorbable gastric balloon, that is capable of maintaining largely its form and stiffness in the gastric medium compared to untreated polymers. The gastric space of e.g., a human is known to comprise an average volume of 800 to 1000 mL. The subject may take in liquid, e.g. one or two glasses of water. The resorbable gastric balloon according to the present disclosure may then obtain a volume that is at least equal to the liquid intake. For example, if a subject takes in 500 ml of water, the gastric balloon that is obtained in particular may have an average volume of 500 - 700 ml. The volume of the balloon may also depend on the available volume in the subject's stomach.

The gastric balloon may thus be able to occupy e.g., about 50 - 85 %, specifically about 50 - 65% of average human gastric space, depending on the liquid intake. The resorbable gastric balloon formed by the polymer according to present disclosure induces satiety based on its volume and size. Furthermore, the resorbable gastric balloon according to examples of the present disclosure maintains largely its form and stiffness for at least 30 minutes, specifically 30 - 45 minutes in the gastric space of a subject. In addition, once the gastric balloon is resorbed to an extent that it passes into the intestinal tract, it still remains largely stable and undissolved for at least 40 minutes in an intestinal solution. Together, this allows for the use of such treated polymer for forming a resorbable gastric balloon with satiety inducing properties.

Throughout the present disclosure, the term "resorbable" may refer to elements or compositions that are absorbed by a subject's body. Resorption of the gastric balloons described herein may generally occur within 2 - 3 hours. Resorption may start in the stomach and take about 30 minutes - 1 hour, and then continue in the intestines, which may take another 40 minutes to 2 hours.

Further aspects of the present disclosure relate to a composition, that comprises the polymer according to any of the examples of the present disclosure. In a further aspect, a composition may be provided including freeze-dried glucomannan. The freeze-dried glucomannan may be obtained in a freeze-drying process according to the present disclosure or in some alternative manner. The composition comprising the polymer (particularly freeze-dried glucomannan, but also others are possible) may be used for oral or gastric administration in a subject. For instance, the composition may be provided in liquid and/or in dry form. Preferably, the composition is provided in dry form. This way allows for a convenient administration of the polymer. The composition dissolves and swells in the gastric space and is further able to promote satiety due to the expansion of the polymer. Compositions comprising polymers that have been freeze-dried according to examples of the present disclosure, and compositions comprising glucomannan that has been freeze-dried in any known manner have been found to be advantageous for the creation of a feeling of satiety in subjects as will be further explained herein.

In some examples, the composition further comprises one or more edible components. The one or more edible components may comprise one or more satiety agents capable to increase the satiety effect. The satiety agent is capable of physiologically inducing the satiety effect in a subject. In a preferred embodiment, the one or more satiety agents are selected from the group consisting of: *opuntia nopal* cactus extract, *garcinia cambogia* extract, *phaseolus vulgaris* extract, *solanum tuberosum* extract, and/or any combinations thereof. The solanum tuberosum extract is also known as potato extract. The edible components may further comprise amino acids, antioxidants and/ or vitamins. In a preferred embodiment, the amino acids, comprise 5-hydroxytryptophan and/or melatonin. The vitamins, for instance, comprise ascorbic acid, tocopheroles and/or tocotrienoles.

This way, the composition provides satiety also at a physiological level, i.e. in addition to the physically induced satiety by the expanded polymer. In addition, the composition comprising the polymer (such as glucomannan) according to present disclosure shows faster dispersion kinetics, as the polyphenols present in the various plant extracts interact with the dispersion and formation of the polymer in solution. This is due to the occurrence of hydrogen-bonding between the polyphenols and the polymer network of the polysaccharide (cf. Lei, Yet al. (2019), "Investigation of the structural and physical properties, antioxidant and antimicrobial activity of pectin-konjac glucomannan composite edible films incorporated with tea polyphenol. " Food Hydrocolloids, 94, 128-135). The plant extracts such as *opuntia nopal* cactus extract, *garcinia cambogia* extract, *phaseolus vulgaris* extract, and *solanum tuberosum* extract thus enhance the physically induced satiety of the polymer due to their polyphenol content.

The composition may further comprise excipients and/or lubricants. For example, the lubricants may be selected from the group of e.g., salts of unsaturated and/saturated fatty acids with C₆-C₂₀ alkyl chains. In a preferred embodiment, magnesium and/or calcium stearate is preferably used. The excipients may be selected from the group of maltose, sucrose, colloidal silicon dioxide, talcum, and other acceptable pharmaceutical carriers. In this manner, the composition allows for 1) physically *inducing* the satiety due to the polymer expansion, 2) enhancing the physically induced satiety based on the polyphenols and 3) further promoting satiety in a subject in a physiological way based on the plant extracts.

Further aspects of the present disclosure relate to a tablet or capsule comprising the composition according to aspects of present disclosure. In this manner, it is established that the composition is provided in a convenient form for self-application and allows for a more convenient handling for the formation of a resorbable gastric balloon in a subject. In a preferred embodiment, the tablet or capsule is provided in multi dose units.

In some examples, a single dose may contain the polymer in a total amount of 100 to 900 mg, preferably 200 to 700 mg, most preferably 300 to 500 mg. In this manner, the composition is capable of forming the resorbable gastric balloon and induce satiety via expansion of the polymer. Further, the single dose according to aspects of present disclosure may contain the composition in a total amount of 600 to 1,800 mg, specifically 800 to 1,600 mg, more specifically 1,000 to 1,400 mg. In this manner, the formation of a resorbable gastric balloon is allowed that further enhances satiety physiologically, in particular (but not limited to) for use in humans. The resorbable gastric balloon is formed upon ingestion of the tablet or capsule and subsequent and/or concurrent hydration of the composition. For example, the tablet(s) or capsule(s) may be ingested with water or may be ingested after/before ingestion of the water. In a specific example, a single dose (comprising two capsules) may be ingested with about 500 ml water. The water allows for dissolving the tablet or capsule, hydrating and swelling the polysaccharide to allow for its volume expansion and thus, for the formation of e.g., a resorbable gastric balloon. The water may be provided in any form, i.e., any type of liquid containing water, such as any type of soft drink. In some aspects, the resorbable gastric balloon may be formed without ingestion of water.

Further aspects of the present disclosure relate to the use of the tablet or capsule according to aspects of present disclosure for inducing satiety in a subject, comprising a step of oral or gastric ingestion of said capsule and oral or gastric ingestion of water, wherein the capsule is administered at least once a day, wherein the administered dose is in a range of 800 mg to 1600 mg. For instance, a capsule may be a hard or a soft capsule and may be made of edible and/or pharmaceutically acceptable components, such as gelatin, cellulose, carrageen and/or starch. In a preferred embodiment, the capsules are hydroxypropyl methylcellulose capsules. Further, the subjects to which the tablets or capsules are administered may comprise humans and/or animals. The subject for inducing satiety, for instance, may be in particular a human, but is not limited to humans.

Further aspects of the present disclosure relate to the use of the tablet or capsule inducing satiety in a subject, comprising the steps of (i) oral or gastric ingestion of the tablet or capsule, and (ii) oral or gastric ingestion of water. In this manner, the balloon, once formed in the stomach, promotes satiety by exerting a physical effect e.g., expansion of the stomach, while the other components of the composition provide satiety at a physiological level.

In a preferred embodiment, the tablet or capsule is used for forming a resorbable gastric balloon. The resorbable gastric balloon expands to an average volume of 400 - 700 cm³, specifically 450 - 600 cm³. In this manner, the resorbable gastric balloon occupies gastric space due to its volume. This allows for inducing satiety in a subject. The subject for inducing satiety may be a human. Further, the tablet or capsule may be ingested with at least 100 ml of water, specifically 300 - 500 ml. In this manner, the tablet or capsule is dissolved and/or the polysaccharide hydrated that allows for producing a resorbable gastric balloon in the gastric space of a human. The volume obtained for the resorbable gastric balloon will depend on the liquid intake, and generally will at least be equal to the liquid intake. For instance, water may be tap water, distilled water, and/or water-comprising liquids. Water may be any liquid that comprises a water content and is capable of dissolving the capsule and/or hydrating the polysaccharide.

Further aspects of the present disclosure and some related benefits are described in the following with reference to the appended drawings.

### BRIEF DESCRIPTION OF THE FIGURES

**Fig**. **1** is a schematic illustration of a resorbable gastric balloon for inducing satiety in a subject according to aspects of the present disclosure;
**Fig. 2** illustrates the viscosity values given in mPa s over time (min) of the solution comprising the polymers A and B;
**Fig. 3** illustrates the measured viscosity values given in mPa s over time (min) provided by the composition according to aspects of the present disclosure compared to a placebo hydrogel in a simulated intestinal medium;
**Fig. 4A** pictures a resorbable gastric balloon (hydrogel A) after 60 min in a simulated intestinal medium;
**Fig. 4B** pictures the placebo hydrogel (hydrogel B) after 60 min in a simulated intestinal medium;
**Fig. 5** is a flow-diagram illustrating a method of inducing satiety in a subject according to aspects of the present disclosure;
**Fig. 6** is a flow-diagram illustrating a method for producing the expandable polymer according to aspects of the present disclosure.

### DETAILED DESCRIPTION OF EXAMPLES

While specific feature combinations are described in the following with respect to exemplary aspects of the present disclosure, it is to be understood that not all features of the described aspects must be present for realizing the technical advantages provided by the systems and methods disclosed herein. The disclosed examples may be modified by combining certain features of one example with one or more features of other examples if technically feasible and functionally compatible. Specifically, the skilled person will understand that features, steps, components and / or functional elements of one example can be combined with technically compatible features, steps, components and / or functional elements of any other example disclosed herein.

The term "based on" as used herein, shall not be construed as a reference to a closed set of information, one or more conditions, one or more factors, or the like. In other words, the phrase "based on A" (where "A" may be information, a condition, a factor, or the like) shall be construed as "based at least on A" unless specifically recited differently. When reference is made herein to a "component", "unit", "device" or the like, this should not be understood as limiting to a particular "component", "unit", "device" or the like, but should encompass other implementation that could have similar and/or the same functions. The appended drawings are of schematic nature and may not be drawn to scale.

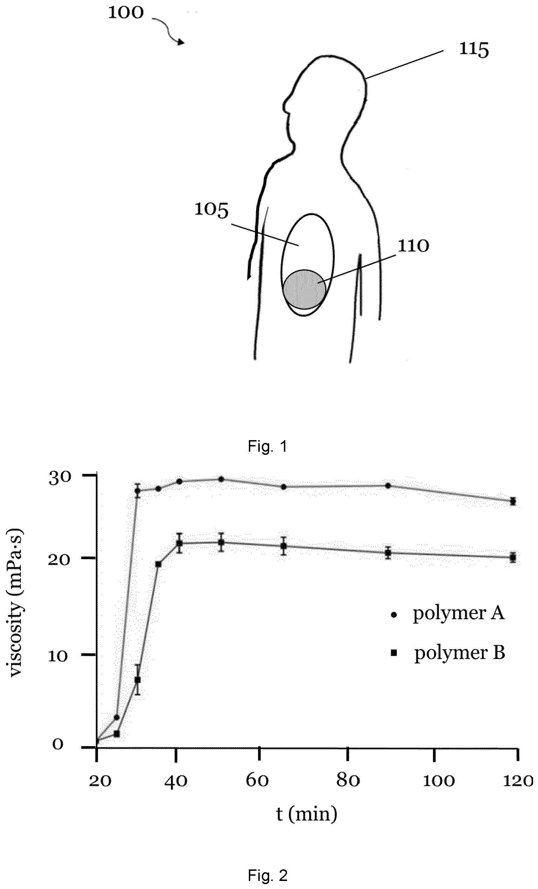

**Fig. 1** is a schematic illustration of the use **100** of a tablet or capsule according to aspects of present disclosure for inducing satiety in a subject **115.** After oral or gastric ingestion of the tablet or capsule and sufficient amount of water, e.g., about 500 mL, the polymer expands and forms a resorbable gastric balloon **110** in the gastric space **105** of the subject **115.**

The resorbable gastric balloon **110** may reaches a volume of 400 - 700 cm³ on average. About 40 - 85 %, specifically about 50 - 65% of average human gastric space may be occupied by the balloon **110.** In this manner, satiety is induced in the subject **115.**

The subject **115** may be a human but is not limited to humans. The resorbable gastric balloon may be formed in the gastric space of any subject which comprises a gastric space. For instance, the subject may also be an animal. The resorbable gastric balloon induces **110** satiety by e.g., physical means, such as expanding the gastric wall of the subject, occupying gastric space **105** and/or applying pressure on the walls of the gastric space **105** in a subject **115.** The tablet or capsule 100 is used for inducing satiety in a subject **115,** wherein the tablet or capsule is administered and wherein a single dose (composed of e.g. two or more capsules or tablets) has a weight of 600 to 1,800 mg, specifically 800 to 1,600 mg, more specifically 1,000 to 1,400 mg and wherein the tablet or capsule is ingested with at least 100 ml of water, specifically at least 300 ml and more specifically about 500 ml of water.

The tablets or capsules **100** constituting a single dose with a total weight of 600 - 1,800 mg, may contain a freeze-dried expandable polymer in a total amount of 100 to 900 mg, specifically 200 to 700 mg, more specifically 300 to 500 mg. In this manner, the polymer expands in the gastric space **105** of the subject **115** and may form a hydrogel or hydrogel-like substance which is sufficiently stable to occupy a volume in the subject's stomach.

The tablet or capsule **100** may further comprise, apart from the expandable polymer, satiety agents capable of physiologically inducing the satiety effect in a subject and may also comprise e.g. excipients and/or lubricants.

**Fig. 2** shows the measured viscosity values in a diagram for the solutions containing polymer A and B. The measured values are listed in **Table 3 and 4.** Polymer A shows a faster dispersion in the solution, as the viscosity raises faster as compared to polymer B. Moreover, the solution containing polymer A reaches a higher absolute viscosity value as compared to the solution containing polymer B. Polymer A is based on the composition according to aspects of present disclosure, i.e. compositions including polymers which may be obtained by a freeze-drying process as herein described.

The expandable polymer used in **Example 2** is a polysaccharide with β-1→4-linked D-glucose and D-mannose such as glucomannan. Polymer B is formed by using an untreated polymer (such as glucomannan). In specific examples, a polymer obtained in accordance with a process in accordance with examples of the present disclosure may obtain a viscosity of at least 25 mPa.s, and specifically of 25 - 30 mPa.s at room temperature.

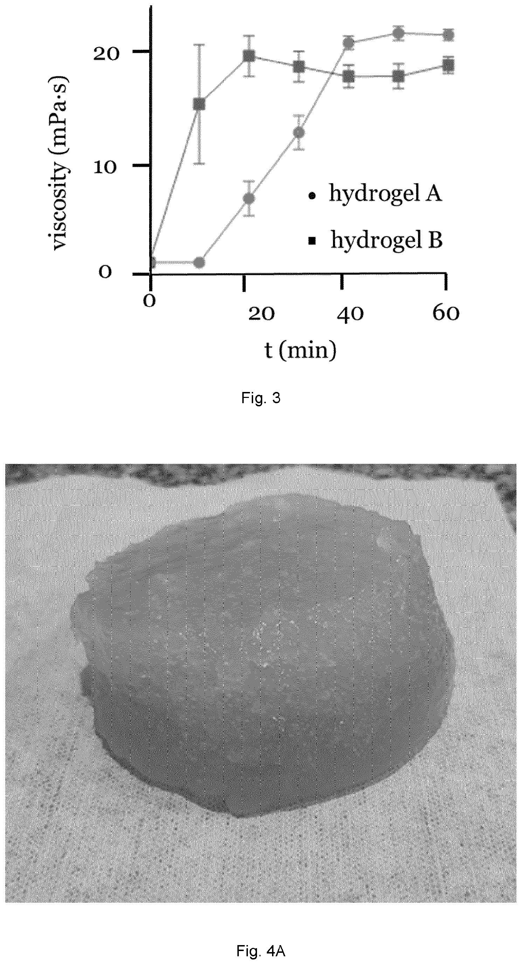

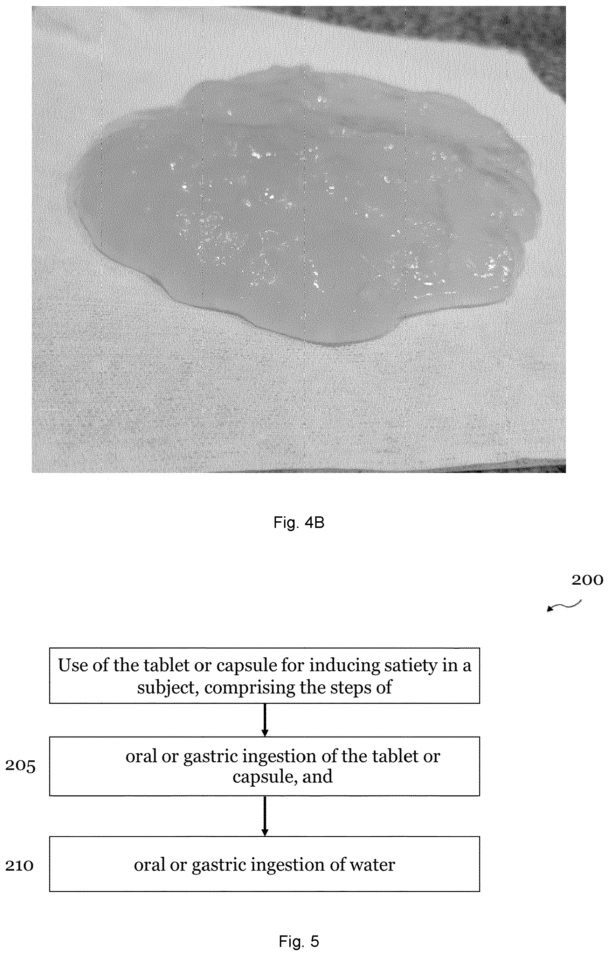

**Fig. 3** illustrates the measured viscosity values of an intestinal solution comprising the composition according to aspects of the present disclosure (hydrogel A) and a placebo composition (hydrogel B). As described in **Example 3,** the hydrogels were placed in a simulated intestinal medium and the viscosity of the medium was measured every 10 min. The measured values are listed in **Table 5.** The viscosity of the intestinal solution containing hydrogel A raises more slowly over time. In comparison, the viscosity of the solution containing hydrogel B rapidly increases, indicating that hydrogel B dissolves extremely fast under these conditions. The values indicate that hydrogel A dissolves more slowly as compared to hydrogel B. This can be further observed in **Figs. 4A** **and** **4B****,** showing that the resorbable gastric balloon (Fig. 4A) comprising the polymer according to present disclosure maintains its form and stiffness as compared to hydrogel B (Fig. 4B).

**Fig. 4A** pictures the hydrogel A of **Example 3.** The hydrogel A is a resorbable gastric balloon based on the expandable polymer according to present disclosure. Hydrogel A remains stable after 60 min in simulated intestinal media and did not dissolve at 37°C as described in the comparative **Example 3.** In comparison, **Fig. 4B** pictures the placebo composition based on untreated glucomannan after 60 min in simulated intestinal media at 37°C.

The composition for producing the hydrogel may further comprise one or more edible components with one or more satiety agent. The satiety agents used for the formation of hydrogel A are selected from the group consisting of: *opuntia nopal* cactus extract, *garcinia cambogia* extract, *phaseolus vulgaris* extract, *solanum tuberosum* extract, and/or any combinations thereof. The composition of hydrogel further comprises amino acids, antioxidants and/ or vitamins such as 5-hydroxytryptophan and/or ascorbic acid. The average amounts of the amino acids, antioxidants and/ or vitamins is in the range of at least 1 to 15 wt.% as compared to the composition. The average amount of the one or more satiety agents used in a composition suitable for forming a resorbable gastric balloon is in the range of at least 5 to 45 wt.% as compared to the composition. In a preferred embodiment, the amounts of the one or more satiety agents comprise the following: 20 to 30 wt.% mg of *solanum tuberosum* / potato extract, at least 5 to 15 wt.% of *garcinia cambogia* extract, at least 1 to 10 wt.% of the *opuntia cactus* extract, at least 10 to 45 wt.% of *phaseolus vulgaris* extract as compared to the composition. In a preferred embodiment, the composition further comprises at least 1 to 10 wt.% of 5- hydroxytryptophan and/or 1 to 5 wt.% of vitamin C as compared to the composition. In a further preferred embodiment, the composition further comprises, at least 0.2 to 5 wt.% of magnesium stearate as lubricant and at least 0.1 to 2 wt.% of colloidal silica dioxide as excipient.

The specific composition for producing the hydrogel A is specified in table 1 below.

**Table 1**

| **ingredients** | **%** | **mg** |
|---|---|---|
| Freeze-dried glucomannan | 33.33 | 400 |
| Solanum tuberosum | 25.00 | 300 |
| Phaseolus vulgaris | 21.67 | 260 |
| Garcinia cambogia | 8.33 | 100 |
| 5-Hydroxytryptophan | 4.17 | 50 |
| Opuntia cactus | 4.17 | 50 |
| Ascorbinic acid | 1.67 | 20 |
| Magnesium stearate | 1.00 | 12 |
| Silicon dioxide (colloidal) | 0.67 | 8 |
| subtotal | 100 | 1200 |

*Phaseolus vulgaris* is widely used due to its phaseolamine content. Phaseolamines are alpha-amylase inhibitors which are enzymes that have the ability to hydrolyze the alpha bonds of large polysaccharides, such as carbohydrates that are consumed such as starch and glycogen. In this manner, complex or long-chain carbohydrates are not absorbed in the intestine. The average amount of the *phaseolus vulgaris* extract used in a composition suitable for forming a resorbable gastric balloon according to present disclosure is in the range of at least 5 to 45 wt.% as compared to the composition.

*Garcinia cambogia* extract is used due to its main compound hydroxycitric acid which has been shown to increases the utilization of fat as an energy source and may play a role in decreasing the formation of fatty tissue by inhibiting the human enzyme ATP citrate lyase and activating the enzyme Carnitine palmitoyltransferase I (CPT-1). The average amount of the *garcinia cambogia* extract used in a composition suitable for forming a resorbable gastric balloon according to present disclosure is in the range of at least 5 to 45 wt.% as compared to the composition. *Garcinia cambogia* extract main functions are: stimulation of thermogenesis, increased lipolysis, reduced lipogenesis, reduced appetite by inhibiting glycogen synthesis, and decreased fat absorption at the intestinal level (Semwal, D. K., Vermaak, I., & Viljoen, A. (2015). "A comprehensive scientific overview of Garcinia cambogia." Phytotherapy, 102, 134-148.).

*Solanum tuberosum* or Potato extract is an appetite suppressant comprising an active ingredient called Proteinase II Inhibitor (PI2). PI2 inhibitor works *via* promoting and extending the body's natural release of cholecystokinin (CCK), which is a peptide that signals key organs, such as the stomach and brain, to induce satiety and fullness. CCK is secreted by the mucosal I-cells of the duodenum and jejunum in response to the presence of partially digested fats and carbohydrates from the stomach. This hormone causes contraction of the gallbladder, release of pancreatic enzymes, inhibition of gastric motility and gastric emptying, thereby decreasing the quantity of the food ingested. The average amount of the *solanum tuberosum* / potato extract used in a composition suitable for forming a resorbable gastric balloon according to present disclosure is in the range of at least 5 to 45 wt.% as compared to the composition.

5-Hydroxytryptophan (5-HTP) is an endogenous amino acid that is a precursor and intermediate in the biosynthesis of serotonin and melatonin from tryptophan. The pharmacological use of 5-HTP derives from its effect on serotonin production in the central nervous system. Specifically, 5-HTP increases the serotonin production. Tryptophan is abundant and can be found in milk, potato, pumpkin and other vegetables but is isolated from the seeds of *Griffonia simplicifolia.* In the composition according to present disclosure, it is used as an appetite suppressant and for its anxiolytic effect. The average amount of the 5-Hydroxytryptophan used in a composition suitable for forming a resorbable gastric balloon according to present disclosure is in the range of at least 1 to 10 wt.% as compared to the composition.

*Opuntia nopal* extract provides a variety of antioxidants comprising phenolic compounds, flavonoids, vitamin C, and vitamin E, which protect cells from free radical damage, by reducing oxidative stress (Andreu, L et al. (2018). "Antioxidant properties and chemical characterization of Spanish Opuntia ficus-indica Mill. cladodes and fruits. "Journal of the Science of Food and Agriculture, 98(4), 1566-1573.). The average amount of the *opuntia nopal* extract used in a composition suitable for forming a resorbable gastric balloon according to present disclosure is in the range of at least 5 to 45 wt.% as compared to the composition.

Further, polyphenols reduce oxidative stress and are known for antilipemic and plasma cholesterol-lowering activity (Santos Diaz, M. et al. (2017). "Opuntia spp.: Characterization and Benefits in Chronic Diseases." Oxidative Medicine and Cellular Longevity, 1-17). Additionally, its high fiber content helps to promote satiety, thereby reducing appetite.

**Fig. 5** is a flow-diagram illustrating the use **200** of the tablet or capsule for inducing satiety in a subject according to aspects of the present disclosure. The use **200** for inducing satiety in a subject comprises the steps of oral or gastric ingestion of the tablet or capsule **205** and oral or gastric ingestion of water **210.** In some aspects, the subject for inducing satiety is a human. For instance, to induce satiety in a human, the tablet or capsule is ingested with at least 100 mL of water, and preferably 300 - 500 ml of water. The tablet or capsule for use of inducing satiety in a subject is e.g., provided in multi dose units. To allow for the formation of a resorbable gastric balloon the tablet(s) or capsule(s) contain(s) the expandable polymer in a total amount of 100 to 900 mg, preferably 200 to 700 mg, most preferably 300 to 500 mg and/or the composition according to present disclosure in a total amount of 600 to 1,800 mg, preferably 800 to 1,600 mg, most preferably 1,000 to 1,400 mg.

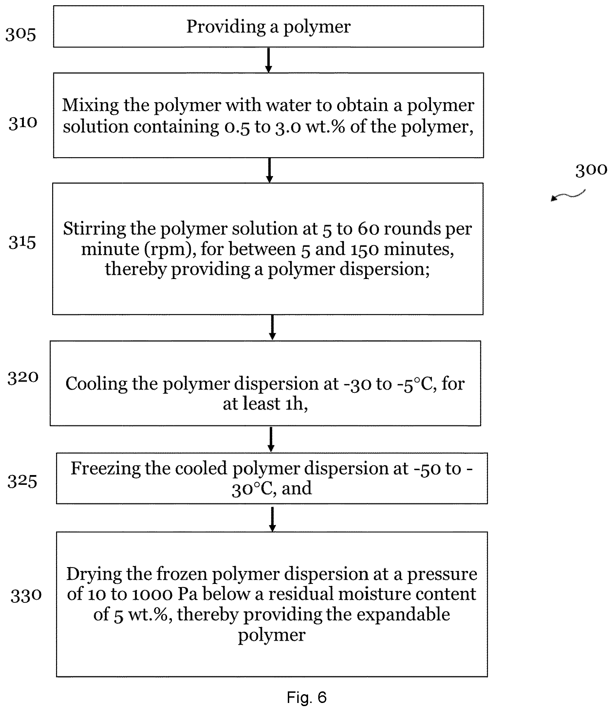

**Fig. 6** is a flow-diagram illustrating a method **300** for producing an expandable polymer according to aspects of the present disclosure. The method **300** for producing an expandable polymer comprises the steps of providing a polymer **305** and mixing the polymer with water to obtain a polymer solution with 0.5 to 3.0 wt.% of the polymer, preferably 1 to 2 wt.%, most preferably 1.25 to 1.75 wt.% (step **310**).

The polymer solution is then stirred at 5 to 60 rounds per minute (rpm), preferably 10 to 50 rpm, most preferably 20 to 40 rpm for between 5 and 150 minutes, preferably between 15 and 120 minutes, most preferably between 30 and 90 minutes until a polymer dispersion is obtained (step **315**).

The polymer dispersion is then cooled at -30 to -5°C, preferably -25 to -10°C, most preferably -20 to -15°C for at least 1h, preferably for at least 5h, most preferably for at least 10h (step **320**).

Afterwards, the cooled polymer dispersion is further cooled at -50 to -30°C, preferably -45 to -35°C (step **325**). Finally, the frozen polymer dispersion is dried at a pressure of 10 to 1000 Pa, preferably 50 to 500 Pa, more preferably 100 to 200 Pa, below a residual moisture content of 5 wt.%, preferably of below 2.5 wt.%, most preferably of below 1.25 wt.% thereby providing the expandable polymer (step **330**). In some aspects, the polymer **305** is a polysaccharide comprising β-1→4-linked D-glucose and D-mannose such as glucomannan.

### Example 1: Preparation of the composition

The expandable polymer according to aspects of present disclosure is ground to e.g., a powder. The composition of the final mixture according to an example is shown in **Tables 1 and 2.** The composition may comprise for example, 400 mg of the powdered expandable polymer (33.33 %) which is incorporated into the final mixture. The one or more edible components of the composition may then be incorporated. For instance, the following one or more edible components are incorporated: 0.3 grams of potato extract (25 %), 0.1 grams of garcinia cambogia extract (8.33 %), 0.05 grams of opuntia cactus extract (4.17 %), 0.26 grams of phaseolus vulgaris extract (21.67 %), 0.05 grams of 5- hydroxytryptophan (4.17 %) and 0.02 grams of vitamin C (1.67 %). As excipients, 0.012 grams of magnesium stearate (1 %) and 8 milligrams of colloidal silica dioxide (0.67 %) were used. These amounts are used for a single dose, provided in e.g., two hydroxypropyl methylcellulose (HPMC) capsules. After producing the expandable polymer such as glucomannan, the glucomannan is combined and mixed with the other one or more edible components. Afterwards, the components of the formulation are e.g., encapsulated.

### Example 2: Comparative desorption kinetic test in simulated stomach media

To demonstrate the improved physical properties and kinetics of the polymer according to present disclosure, a comparative test with capsules comprising 200 mg of polymer according to present disclosure ("Polymer A") and capsules comprising untreated polymer ("Polymer B"). 6 capsules (1200 mg of polymer in total) of the composition according to **Table 1** were taken to produce Polymer A. To simulate the stomach medium, an aqueous hydrochloric acid solution was prepared with the pH of 1.60. The Polymers A and B were placed in two different solutions comprising the simulated stomach medium. The solutions comprising the polymer were continuously stirred. The hydroxypropyl methyl cellulose capsules dissolves after 20 minutes in acidic media. Aliquots of the polymer solution A and B were taken every 10 minutes after the capsule is dissolved, and the viscosity as a function of time was determined using a rotational viscosimeter under conditions of 20°C. **Table 3 and 4** show the measured values for Polymer A and B.

**Table 3**

| **Polymer A** | | |
|---|---|---|
| Time (min) | average viscosity (mPas) | Time (min) |
| **20** | 1 | **20** |
| **25** | 3.5 | **25** |
| **30** | 11.4 | **30** |
| **35** | 28.1 | **35** |
| **40** | 28.8 | **40** |
| **50** | 29.1 | **50** |
| **65** | 28.3 | **65** |
| **90** | 28.4 | **90** |
| **120** | 26.7 | **120** |

**Table 4**

| **Polymer B** | | |
|---|---|---|
| Time (min) | average viscosity (mPas) | SD |
| **20** | 1 | 0 |
| **25** | 1.7 | 0.3 |
| **30** | 7.5 | 1.6 |
| **35** | 20 | 0.1 |
| **40** | 22.2 | 1.0 |
| **50** | 22.3 | 0.9 |
| **65** | 21.9 | 0.9 |
| **90** | 21.2 | 0.6 |
| **120** | 20.7 | 0.5 |

The results are shown in **Figure 2** and demonstrate an increase of viscosity for the solution comprising Polymer A and B respectively. Specifically, the solution comprising polymer A exhibits a faster viscosity increase as compared to the solution containing Polymer B. Polymer A exhibited an increase in viscosity of the medium of approximately 40 % when it reached equilibrium. It can be concluded, that due to the faster increase in viscosity and higher viscosity value reached in the solution containing Polymer A, the Polymer A disperses more effectively in the stomach medium as compared to Polymer B. The polymer (polysaccharide) used for the formation of Polymer A is characterized in that it expands via hydration, thereby exhibiting a viscosity of 25 to 35 mPa s of the medium when measured by a rotational viscometer under conditions of 20°C. The results demonstrate that when the expandable polymer according to present disclosure is incorporated into the mixture it exhibits different dispersion kinetics as compared to an untreated polymer.

### Example 3: Comparative desorption kinetic test in simulated intestinal media

A simulated intestinal media was prepared by using 1 % sodium bicarbonate and 1 % pancreatin dissolved in water. The pH was adjusted to pH 8.00. To determine the improved physical properties of the polymer according to present disclosure, a comparative test with capsules comprising 200 mg of glucomannan according to present disclosure ("Hydrogel A") and capsules comprising untreated glucomannan ("Hydrogel B") were used. The hydrogels A and B were formed and obtained at pH 1.6, i.e. the capsules were introduced into a medium of pH 1.6 mimicking content of a stomach. Polymerization thus occurs at pH 1.6. Afterwards, the resulting hydrogel is placed in a mold with 500 mL of the simulated intestinal media. The samples were continuously shaken in the medium and were incubated for 60 min at 37 ºC. The viscosity of the media was measured using a rotational viscosimeter under conditions of 20°C. The Assays were performed by triplicate, the means were calculated, and the results are shown in **Table 5.**

**Table 5**

| | **Hydrogel A** | | **Hydrogel B** | |
|---|---|---|---|---|
| Time (min) | Mean viscosity (mPa.s) | SD | Mean viscosity (mPa.s) | SD |
| **0** | 1 | 0 | 1 | 0 |
| **10** | 1 | 0 | 16.0 | 5.7 |
| **20** | 7.1 | 1.6 | 20.6 | 1.9 |
| **30** | 13.3 | 1.6 | 19.6 | 1.5 |
| **40** | 21.8 | 0.6 | 18.7 | 1.1 |
| **50** | 22.8 | 0.7 | 18.7 | 1.2 |
| **60** | 22.6 | 0.56 | 19.7 | 0.8 |

The data reported in **Table 5** shows that the solution containing hydrogel A shows a slower decrease in viscosity as compared to the placebo solution containing hydrogel B. Hydrogel B exhibited an increase of media viscosity at 10 minutes reaching an equilibrium at 20 minutes at 20.6 ± 1.9 mPa s. On the other hand, the solution comprising hydrogel A starts to increase its viscosity at 20 minutes. The equilibrium for the hydrogel A solution was reached at 40 minutes at 21.8 ± 0.7 mPa s.

**Fig. 4A** **and** **4B** are pictures showing the two different hydrogels (hydrogel A, Fig. 4A; and hydrogel B, Fig. 4B) after 60 min incubation time in the intestinal medium. **Fig. 4A** indicates that hydrogel A comprises different physical properties at room temperature and specifically, more stiffness compared to hydrogel B, which is shown in **Fig. 4B****.** Hydrogel B is not able to maintain its form and disintegrates when removed from the mold. In comparison, hydrogel A maintained its form even after removal from the mold. In conclusion, **Example 3** demonstrates that the desorption kinetic of hydrogel A is highly decreased as compared to hydrogel B and further proves that hydrogel A comprises improved physical characteristics such as stiffness as compared to hydrogel B.

### Example 4: Method for inducing satiety in a subject

In **Table 1 and 2** the daily amounts to be administered to a subject are listed. The subject to induce satiety may be a human and/or an animal. The daily amounts for inducing satiety in a human, for example, may be in the form of a dose of e.g., two capsules each containing for example 600 mg of the composition. The aforementioned dose is adapted to an "average" subject (i.e. of average characteristics) for whom the treatment is intended, e.g. an adult with mild overweight and/or class 1 obesity. Obesity can be subdivided into categories based on the Body Mass Index (BMI): Class 1 obesity: BMI of 30 to < 35. Class 2 obesity: BMI of 35 to < 40. Class 3 obesity: BMI of 40 or higher.

Both capsules may be administered for instance 30 to 45 minutes before each meal with water, or mineral water. The quantity of water is preferably about 500 mL and should be at least 100 mL. The preferred composition of the disclosure which is suitable for forming a resorbable gastric balloon comprises the values indicated in **Table 2.**

**Table 2**

| **components** | **range %** | **weight g** |
|---|---|---|
| Freeze-dried glucomannan | 30-35 | 0.36 - 0.42 |
| Solanum tuberosum | 22.5 - 27.5 | 0.27 - 0.33 |
| Phaseolus vulgaris | 20-22 | 0.24 - 0.26 |
| Garcinia cambogia | 6-10 | 0.07 - 0.12 |
| 5-Hydroxytryptophan | 3-6 | 0.03 - 0.07 |
| Opuntia cactus | 3-6 | 0.03 - 0.07 |
| Ascorbinic acid | 1 -3 | 0.01 - 0.03 |
| Magnesium stearate | 0 - 1.2 | 0 - 0.01 |
| Silicon dioxide (colloidal) | 0-1 | 0 - 0.01 |

**Fig. 5** further illustrates the use of the tablet or capsule for inducing satiety in a subject.

### Example 5: Method for producing the polymer

To produce the expandable glucomannan, the polysaccharide is placed in e.g., distilled water. For instance, 1.5 grams of glucomannan are placed in 100 ml of distilled water to allow for a 1.5 wt.% polymer solution, which is agitated at 20 to 40 rpm for 60 min. Afterwards, the polymer dispersion is cooled prior to the freeze-drying process, and is kept cooled for instance at -18 C for one day. It is known that the subsequent freeze-drying process removes interstitial water in polymers thereby creating sites where water molecules can enter, wherein the further hydration process can occur more effectively. In some aspects, the cooled polymer dispersion is kept for example for 4 h at -40°C. The frozen polymer dispersion is then placed under reduced pressure at 10 to 1000 Pa, preferably 50 to 500 Pa, more preferably 100 to 200 Pa until the residual moisture content reaches below 5 wt.%, preferably below 2.5 wt.%, most preferably below 1.25 wt.%. In some aspects, the reduced pressure was kept for 2 days. In this manner, the expandable polymer is obtained. Afterwards, the polymer is for example grounded to a powder and might be used for further processing. Further processing includes, for example, encapsulation of the polymer, and/or tableting of the polymer. Further options may include granulation, and/or further drying of the polymer.

### Example 6: Experimental results of inducing satiety in subjects

In the following experiment, the experimental group included 7 adult humans with obesity, and the control group included 6 adult humans with obesity. During 6 weeks, the experimental group received two capsules with the composition according to table 1, together with 500 ml of water half an hour before each meal (lunch and dinner). The control group instead received a placebo (also two capsules), together with 500 ml of water half an hour before the same meals. The placebo had the same composition as table 1, with the only difference that glucomannan rather than freeze-dried glucomannan is used.

During the six weeks, the development of the weight of the subjects, weight loss, waist circumference (cm), fat percentage, visceral fat percentage were registered and analyzed. Additionally, the subjects were asked to fill out a questionnaire regarding their food intake, their appetite and the feeling of satiety before, during and after meals.

Some relevant results are shown in the following table 6:

**Table 6**

| | Experimental group | (n=7) | Control group | (n=6) |
|---|---|---|---|---|
| | Mean | SD | Mean | SD |
| Weight loss (Kg) | 3,98 | 1,19 | 3,37 | 1,68 |
| Weight loss (% normalized) | 4,89 | 2,02 | 3,55 | 1,45 |
| Reduction of waist circumference (cm) | 6,77 | 3,27 | 6,25 | 2,23 |
| Reduction of waist circumference (% normalized) | 6,60 | 3,02 | 5,89 | 2,20 |
| Reduction of body fat percentage (%) | 2,50 | 1,04 | 1,81 | 1,16 |
| Reduction of body fat (% normalized) | 7,23 | 3,87 | 4,87 | 3,43 |
| Reduction of visceral fat (%) | 1,33 | 0,52 | 0,83 | 0,75 |
| Reduction of visceral fat (% normalized) | 14,6 | 7,94 | 8,01 | 7,03 |

With respect to the table presented above, the data obtained show that the average weight loss of the subjects who received the experimental treatment was 3.98 ± 1.19 Kg, representing 4.89 ± 2.02% of the weight of the patients. For the control group, the weight loss was 3.37 ± 1.68 Kg, representing 3.55 ± 1.45% of the weight of the subjects.

For the reduction of the perimeter of the waist, the subjects who received treatment lost an average of 6.77 ± 3.27 centimeters, representing 6.60 ± 3.02% of the subjects' waist perimeter. Likewise, the subjects who received placebo had a decrease in circumference of 6.25 ± 2.23 cm, representing 5.89 ± 2.20% of the initial circumference.

For the loss of fat percentage, the subjects who received treatment lost an average of 2.50 ± 1.04%, representing a 7.23 ± 3.87% reduction of fat percentage of these subjects. Likewise, subjects who received placebo had a decrease in fat percentage of 1.81 ± 1.16%, representing 4.87 ± 2.20% of the initial fat percentage of the subjects. For the percentage loss of visceral fat, the subjects who received treatment lost an average of 1.33 ± 0.52%, representing a 14.6 ± 7.94% percentage of visceral fat of the subjects. Likewise, subjects who received placebo had a decrease in fat percentage of 0.83 ± 0.75%, representing 8.01 ± 7.03% of the initial visceral fat of the subjects.

Both the experimental group and the control group generally expressed a reduced appetite before a meal, and it was found that appetite returned to the subjects of both the experimental group and the control group about 4 hours after a meal. However, there was a noticeable difference in food intake between the two groups. About 75% of the meals of the subjects in the experimental group were smaller than usual, whereas more than 50% of the meals of the subjects in the control group were reported to be of usual size. In about 20% of the meals in the experimental group, the subjects reported that they had reduced the size of their meals by 75%, i.e. their food intake was about 25% of their usual food intake in these meals. The same thing occurred for only 5% of the meals of the control group.

Although only a number of particular embodiments and examples have been disclosed herein, it will be understood by those skilled in the art that other alternative embodiments and/or uses and obvious modifications and equivalents thereof are possible. Furthermore, the present disclosure covers all possible combinations of the particular embodiments described. Thus, the scope of the present disclosure should not be limited by particular embodiments but should be determined only by a fair reading of the claims that follow.

## Claims

1. A method for producing an expandable polymer, comprising the following steps;
a) providing a polymer,
b) mixing the polymer with water to obtain a polymer solution containing 0.5 to 3.0 wt.% of the polymer, preferably 1 to 2 wt.%, most preferably 1.25 to 1.75 wt.%;
c) stirring the polymer solution at 5 to 60 rounds per minute (rpm), preferably 10 to 50 rpm, most preferably 20 to 40 rpm for between 5 and 150 minutes, preferably between 15 and 120 minutes, most preferably between 30 and 90 minutes, thereby providing a polymer dispersion;
d) cooling the polymer dispersion at -30 to -5°C, preferably -25 to -10°C, most preferably -20 to -15°C for at least 1h, preferably for at least 5h, most preferably for at least 10h,
e) freezing the cooled polymer dispersion at -50 to -30°C, preferably -45 to -35°C; and
f)drying the frozen polymer dispersion at a pressure of 10 to 1000 Pa, preferably 50 to 500 Pa, more preferably 100 to 200 Pa, below a residual moisture content of 5 wt.%, preferably of below 2.5 wt.%, most preferably of below 1.25 wt.% thereby providing the expandable polymer.

2. The method according to claim 1, wherein the polymer is a polysaccharide.

3. The method according to claim 2, wherein the polysaccharide comprises β-1→4-linked D-glucose and D-mannose.

4. The method according to claim 3, wherein the polysaccharide is glucomannan.

5. A composition comprising the polymer according to any of claims 1 to 4.

6. The composition according to claim 5, further comprising one or more edible components.

7. The composition according to claim 6, wherein the one or more edible components comprise one or more satiety agents increasing the satiety effect.

8. The composition according to claim 7, wherein the one or more satiety agents are selected from the group consisting of: opuntia nopal cactus extract, garcinia cambogia extract, phaseolus vulgaris extract, solanum tuberosum extract, and/or any combinations thereof.

9. A tablet or capsule comprising the composition according to any of claims 5 to 8.

10. The tablet or capsule according to claim 9, wherein the polymer is contained in a total amount of 100 to 900 mg, preferably 200 to 700 mg, most preferably 300 to 500 mg.

11. The tablet or capsule according to claim 9 or 10, wherein the composition is contained in a total amount of 600 to 1,800 mg, preferably 800 to 1,600 mg, most preferably 1,000 to 1,400 mg.

12. Use of the tablet or capsule according to any of claims 9 to 11 for inducing satiety in a subject, comprising the steps of oral or gastric ingestion of the tablet or capsule, and oral or gastric ingestion of water.

13. Use of the tablet or capsule according to claim 12, wherein the subject is a human.

14. Use of the tablet or capsule according to claim 13, wherein the tablet or capsule is ingested with 100 to 700 mL, preferably with 250 to 600 mL, more preferably with 400 to 500 mL of water.

15. A resorbable gastric balloon formed from the tablet or capsule according to any of claims 9 to 11.
